# EUROPÄISCHE PATENTSCHRIFT

(11) **EP 3 656 462 B1**
(45) Veröffentlichungstag und Bekanntmachung des Hinweises auf die Patenterteilung: **20.05.2026**
(21) Anmeldenummer: 19210024.6
(22) Anmeldetag: 19.11.2019
(51) Int. Cl.: B01F 27/2123, B01F 27/70, B01F 33/82, B01F 35/71, B01F 35/83, B01F 101/06

(54) **DOSIER- UND MISCHSYSTEM UND VERFAHREN ZU SEINEM BETRIEB**
DOSING AND MIXING SYSTEM AND METHOD FOR OPERATING IT
SYSTÈME DE DOSAGE ET DE MÉLANGE ET PROCÉDÉ POUR SON OPERATION

(30) Priorität: 20.11.2018 DE 102018129148
(43) Veröffentlichungstag der Anmeldung: 27.05.2020
(73) Patentinhaber: Gericke AG, 8105 Regensdorf (CH)
(72) Erfinder: Weinekötter, Ralf, 8032 Zürich (CH); Presch, Georg, 79809 Nöggenschwiel (DE); Bernhard, Meir, 8102 Oberengstringen (CH); Römer, Raffael, 8700 Küsnacht (CH); Tegel, Florian, 78224 Singen (DE)
(74) Vertreter: Daub, Thomas

(56) Entgegenhaltungen:
- CN-A- 108 568 247
- DE-A1- 4 119 261
- DE-C- 972 193
- US-A1- 2017 028 366

## Beschreibung

### Stand der Technik

Die Erfindung betrifft ein Dosier- und Mischsystem mit einer Mischvorrichtung und mit zumindest zwei Dosiervorrichtungen.

Es ist bereits ein Dosier- und Mischsystem vorgeschlagen worden, mit zumindest einer Mischvorrichtung, insbesondere einer kontinuierlichen Mischvorrichtung, welche zumindest einen Mischbehälter mit einem Aufnahmebereich zu einer Aufnahme eines Mischguts und zumindest eine Mischeinheit zu einem Mischen des in dem Mischbehälter befindlichen Mischguts aufweist, mit einer ersten Dosiervorrichtung, die zumindest einen ersten Dosierbehälter mit einem Aufnahmebereich zu einer Aufnahme einer ersten Mischgutkomponente und zumindest eine Fördereinheit zu einer Förderung der ersten Mischgutkomponente von dem ersten Dosierbehälter zu dem Mischbehälter aufweist, und mit einer zweiten Dosiervorrichtung, die zumindest einen zweiten Dosierbehälter mit einem Aufnahmebereich zu einer Aufnahme einer zweiten Mischgutkomponente und zumindest eine Dosiereinheit aufweist.

Ferner sind aus der US 2017/028366 A1, die ein Dosier- und/oder Mischsystem nach dem Oberbegriff des Anspruchs 1 offenbart, der DE 972 193 C, der DE 41 19 261 A1 und der CN 108 568 247 A ebenfalls bereits Dosier- und/oder Mischsysteme bekannt.

Die Aufgabe der Erfindung besteht insbesondere darin, eine gattungsgemäße Vorrichtung mit verbesserten Eigenschaften hinsichtlich einer Kompaktheit sowie einer Flexibilität bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einem Dosier- und Mischsystem mit zumindest einer Mischvorrichtung, insbesondere einer kontinuierlichen Mischvorrichtung, welche zumindest einen Mischbehälter mit einem Aufnahmebereich zu einer Aufnahme eines Mischguts und zumindest eine Mischeinheit zu einem Mischen des in dem Mischbehälter befindlichen Mischguts aufweist, wobei die Mischeinheit eine Mischerwelle aufweist, mit zumindest einer ersten Dosiervorrichtung, die zumindest einen ersten Dosierbehälter mit einem Aufnahmebereich zu einer Aufnahme einer ersten Mischgutkomponente und zumindest einer Fördereinheit zu einer Förderung der ersten Mischgutkomponente von dem ersten Dosierbehälter zu dem Mischbehälter aufweist, und mit zumindest einer zweiten Dosiervorrichtung, die zumindest einen zweiten Dosierbehälter mit einem Aufnahmebereich zu einer Aufnahme einer zweiten Mischgutkomponente und zumindest eine Dosiereinheit aufweist.

Es wird vorgeschlagen, dass die zumindest eine Dosiereinheit dazu vorgesehen ist, die zweite Mischgutkomponente von dem zweiten Dosierbehälter der ersten Dosiervorrichtung zuzuführen, wobei der Dosierbehälter an einer Unterseite in ein Zuführgehäuse einer Fördereinheit mündet. Vorzugsweise ist die Dosiereinheit dazu vorgesehen, die zweite Mischgutkomponente direkt der ersten Dosiervorrichtung zuzuführen. Insbesondere ist die Dosiereinheit direkt mit der ersten Dosiervorrichtung gekoppelt. Vorzugsweise ist die zweite Dosiervorrichtung in einem Betrieb frei von einer ersten Mischgutkomponente, wobei die erste Dosiervorrichtung in einem Betrieb, insbesondere in der Fördereinheit, zumindest teilweise mit der zweiten Mischgutkomponente gefüllt ist. Vorzugsweise wäre auch noch die Kopplung einer weiteren zweiten Dosiervorrichtung an die erste Dosiervorrichtung und/oder das vorsehen einer weiteren, dritten Dosiervorrichtung denkbar. Unter einem "Dosier- und Mischsystem" soll in diesem Zusammenhang insbesondere ein System verstanden werden, das zu einer definierten Dosierung sowie einem anschließenden Mischen von zumindest zwei Komponenten vorgesehen ist. Vorzugsweise erfolgt eine Dosierung sowie ein anschließendes Mischen direkt aufeinanderfolgend, insbesondere kontinuierlich. Besonders bevorzugt erfolgt eine Dosierung direkt in einen Mischbehälter einer Mischvorrichtung des Systems. Besonders bevorzugt umfasst das System eine Mischvorrichtung und zumindest zwei Dosiervorrichtungen. Unter einem "Mischbehälter" soll in diesem Zusammenhang insbesondere ein Behälter verstanden werden, in welchem ein Mischvorgang der Mischvorrichtung zumindest teilweise durchgeführt wird.

Vorzugsweise soll darunter insbesondere ein Behälter verstanden werden, welcher einen Aufnahmebereich zu einer Aufnahme eines Mischguts aufweist. Das Mischgut wird insbesondere für einen Mischvorgang in dem Behälter aufgenommen. Besonders bevorzugt ist in dem Mischbehälter eine Mischeinheit angeordnet, welche zu einem Mischen des Mischguts vorgesehen ist. Vorzugsweise weist der Mischbehälter eine zumindest im Wesentlichen zylindrische Grundform auf. Ferner soll in diesem Zusammenhang unter einer "Mischeinheit" insbesondere eine Einheit verstanden werden, welche zu einem Mischen des in dem Mischbehälter befindlichen Mischguts vorgesehen ist. Es sind verschiedene, einem Fachmann als sinnvoll erscheinende Mischeinheiten zu einem Mischen des Mischguts vorgesehen. Vorzugsweise weist die Mischeinheit zumindest eine Mischerwelle auf.

Unter einem "Dosierbehälter" soll in diesem Zusammenhang insbesondere ein Behälter verstanden werden, aus welchem heraus eine Mischgutkomponente zu einer Dosierung, insbesondere selbsttätig, entnommen wird. Vorzugsweise dient der Dosierbehälter zu einer Aufnahme, insbesondere zu einer temporären Lagerung einer Mischgutkomponente. Unter einer "Fördereinheit" soll in diesem Zusammenhang insbesondere eine Einheit der Dosiervorrichtung verstanden werden, die zu einer definierten Dosierung und/oder Förderung, insbesondere zu einer kontinuierlichen Dosierung, d.h. insbesondere der rezeptgetreuen kontinuierlichen Zugabe der Komponenten, einer Mischgutkomponente aus dem Dosierbehälter heraus, insbesondere in den Mischbehälter, vorgesehen ist. Vorzugsweise ist die Fördereinheit dazu vorgesehen eine definierte Menge, insbesondere einen definierten Massenstrom, und/oder einen definierten Volumenstrom einer Mischgutkomponente aus dem Dosierbehälter heraus zu fördern. Bevorzugt weist die Fördereinheit einen Führungskanal und zumindest ein Förderwerkzeug auf. Vorzugsweise ist das Förderwerkzeug beispielsweise von einer Schnecke gebildet. Es sind verschiedene, einem Fachmann als sinnvoll erscheinende Fördereinheiten denkbar, wie beispielsweise eine Dosierschnecke. Unter einer "Dosiereinheit" soll in diesem Zusammenhang insbesondere eine Einheit der Dosiervorrichtung verstanden werden, die zu einer definierten Entnahme einer Mischgutkomponente aus dem Dosierbehälter heraus, insbesondere in den Mischbehälter, vorgesehen ist. Vorzugsweise ist die Dosiereinheit dazu vorgesehen eine definierte Menge und/oder einen definierten Volumenstrom einer Mischgutkomponente aus dem Dosierbehälter heraus zu entnehmen. Bevorzugt kann eine Entnahme dabei sowohl mittels eines Förderwerkzeugs als auch mittels eines Ventils und/oder einer Klappe, wie insbesondere mittels einer Dosier- und/oder Absperrklappe, erfolgen. Vorzugsweise ist die Dosiereinheit von einer Fördereinheit gebildet.

Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Durch die erfindungsgemäße Ausgestaltung des Dosier- und Mischsystems kann insbesondere ein vorteilhaft kompaktes Dosier- und Mischsystem für zumindest zwei Mischgutkomponenten bereitgestellt werden. Es kann insbesondere bereits eine Vormischung der Mischgutkomponenten in der ersten Dosiervorrichtung erreicht werden. Hierdurch kann/können eine vorteilhaft zuverlässige Durchmischung und/oder vorteilhaft kurze Mischzeiten erreicht werden. Es kann gegenüber klassischen Dosier- und Mischsystemen insbesondere eine vorteilhaft kurze Mischzeit erreicht werden insbesondere zwischen 0,1 und 10 Sekunden.

Ferner wird vorgeschlagen, dass die zumindest eine Dosiereinheit dazu vorgesehen ist, die zweite Mischgutkomponente von dem zweiten Dosierbehälter der Fördereinheit zuzuführen. Vorzugsweise wird die zweite Mischgutkomponente von der Dosiereinheit direkt der Fördereinheit zugeführt. Bevorzugt mündet die zweite Dosiereinheit in die Fördereinheit und ist dazu vorgesehen die zweite Mischgutkomponente der ersten Mischgutkomponente in der Fördereinheit zuzuführen. Dadurch kann ein vorteilhaft kompaktes Dosier- und Mischsystem bereitgestellt werden. Es kann insbesondere eine vorteilhaft geringe Bauhöhe des Dosier- und Mischsystem erreicht werden. Insbesondere kann dadurch die zweite Mischgutkomponente bereits in der Fördereinheit der ersten Mischgutkomponente beigemischt werden. Ferner kann dadurch ein vorteilhaft geringer Reinigungsaufwand bei Produktwechseln erreicht werden. Durch das kompakte Dosier- und Mischsystem ist bei Produktwechseln, wie beispielsweise bei dem Wechsel von Flavours, ein minimales Equipment zu reinigen. Hierdurch können insbesondere Crosskontaminationen bei nicht kompatiblen Produkten, wie insbesondere aufgrund von Allergenen, von Halal, von Kaschrut, also insbesondere von koscheren Speisen, oder dergleichen, vermieden werden.

Erfindungsgemäß wird vorgeschlagen, dass die zumindest eine Fördereinheit in zumindest einem Mischabschnitt der Fördereinheit zu einem Mischen der ersten Mischgutkomponente und der zweiten Mischgutkomponente vorgesehen ist. Vorzugsweise ist die Dosiereinheit dazu vorgesehen die zweite Mischgutkomponente vor dem Mischabschnitt der Fördereinheit zuzuführen. Bevorzugt weist die Fördereinheit den Mischabschnitt auf. Besonders bevorzugt weist die Fördereinheit zumindest einen Dosierabschnitt und einen Mischabschnitt auf. Der Mischabschnitt ist insbesondere zu einer gezielten Durchmischung der Mischgutkomponenten vorgesehen. Vorzugsweise weist die Fördereinheit in dem zumindest einen Mischabschnitt eine Mischerwelle und/oder eine als Mischerwelle ausgebildetes Förderwerkzeug auf. Bevorzugt bildet das Förderwerkzeug in dem Mischabschnitt eine Mischerwelle aus. Grundsätzlich wäre jedoch auch denkbar, dass die Fördereinheit eine separate Mischerwelle aufweist. Insbesondere kann dadurch die zweite Mischgutkomponente bereits in der Fördereinheit der ersten Mischgutkomponente beigemischt werden. Hierdurch kann eine vorteilhaft zuverlässige Durchmischung und/oder vorteilhaft kurze Mischzeiten erreicht werden. Es kann gegenüber klassischen Dosier- und Mischsystemen insbesondere eine vorteilhaft kurze Mischzeit erreicht werden, insbesondere zwischen 0,1 und 10 Sekunden.

Erfindungsgemäß wird ferner vorgeschlagen, dass die zumindest eine Fördereinheit einen Führungskanal und ein in dem Führungskanal rotierend abgetriebenes Förderwerkzeug aufweist, wobei die Fördereinheit einen Mischabschnitt und einen Dosierabschnitt aufweist, wobei der Mischabschnitt direkt an den Dosierabschnitt angrenzt, wobei der Mischabschnitt entlang des Massenstroms der ersten Mischgutkomponente nach dem Dosierabschnitt angeordnet ist. Vorzugsweise umfasst das Förderwerkzeug eine sich durch den Führungskanal erstreckende Antriebswelle. Es sind verschiedene, einem Fachmann als sinnvoll erscheinende Förderwerkzeuge denkbar. Bevorzugt ist das Förderwerkzeug zumindest abschnittsweise als eine Dosierschnecke ausgebildet. Das Förderwerkzeug ist insbesondere zu einer Förderung einer definierten Menge und/oder einem definierten Volumenstrom einer Mischgutkomponente aus dem Dosierbehälter heraus vorgesehen. Der Führungskanal ist insbesondere von einem zylindrischen Kanal gebildet, welcher sich von dem ersten Dosierbehälter zu dem Mischbehälter und/oder einem Eingangskanal des Mischbehälters erstreckt. Dadurch kann insbesondere eine vorteilhafte Fördereinheit bereitgestellt werden. Es kann insbesondere eine Fördereinheit bereitgestellt werden, die insbesondere zu einer vorteilhaft präzisen Förderung und Dosierung einer Mischgutkomponente vorgesehen ist.

Erfindungsgemäß wird weiter vorgeschlagen, dass das Förderwerkzeug der Fördereinheit in dem zumindest einen Mischabschnitt der Fördereinheit als Mischwerkzeug ausgebildet ist, wobei das Förderwerkzeug der Fördereinheit eine rotierend getriebene Welle aufweist, die in dem Mischabschnitt mehrere an einem Umfang eines zylindrischen Grundkörpers der Welle angeordnete Mischmittel aufweist. Vorzugsweise ist das Förderwerkzeug der Fördereinheit in dem zumindest einen Mischabschnitt der Fördereinheit als Mischwelle ausgebildet. Bevorzugt ist das Förderwerkzeug einstückig ausgebildet und weist zumindest ein Mischwerkzeug und zumindest ein Dosierwerkzeug auf. Unter einer "Mischerwelle" soll dabei insbesondere ein Mischwerkzeug verstanden werden, welches zumindest eine Welle und zumindest ein an einem Umfang der Welle angeordnetes Mischmittel, insbesondere zumindest ein Paddel, aufweist. Während eines Mischvorgangs wird die Mischerwelle insbesondere rotatorisch angetrieben. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Dadurch kann insbesondere eine vorteilhafte Fördereinheit bereitgestellt werden. Es kann insbesondere eine Fördereinheit bereitgestellt werden, die neben einer Förderung und Dosierung einer Mischgutkomponente zusätzlich zu einer Vermischung der Mischgutkomponenten verwendet werden kann. Hierdurch kann insbesondere eine vorteilhaft hohe Homogenität des Mischguts, selbst bei sehr geringen Komponentenanteilen gewährleistet werden.

Erfindungsgemäß wird vorgeschlagen, dass das Förderwerkzeug der Fördereinheit in einem von dem Mischabschnitt der Fördereinheit verschiedenen Dosierabschnitt der Fördereinheit als Dosierschnecke ausgebildet ist. Vorzugsweise grenzt der Dosierabschnitt direkt an den Mischabschnitt an. Bevorzugt ist der Dosierabschnitt in Förderrichtung der Fördereinheit vor dem Mischabschnitt angeordnet. Besonders bevorzugt erstreckt sich eine Antriebswelle des Förderwerkzeugs durch den Dosierabschnitt und durch den Mischabschnitt. Die Dosierschnecke ist insbesondere von einer archimedischen Schraube für einen Schneckenförderer gebildet. Vorzugsweise geht die Dosierschnecke jedoch in eine Mischerwelle über. Grundsätzlich wäre jedoch denkbar, dass die Mischerwelle ebenfalls zumindest teilweise zu einer Förderung der Mischgutkomponenten vorgesehen ist. Dadurch kann insbesondere eine vorteilhafte Fördereinheit bereitgestellt werden. Es kann insbesondere eine Fördereinheit bereitgestellt werden, die insbesondere zu einer vorteilhaft präzisen Förderung und Dosierung einer Mischgutkomponente vorgesehen ist.

Erfindungsgemäß wird vorgeschlagen, dass der Führungskanal der Fördereinheit in einem Mischabschnitt der Fördereinheit einen gegenüber dem Dosierabschnitt vergrößerten Innendurchmesser aufweist. Vorzugsweise ist der Innendurchmesser des Führungskanals in dem Mischabschnitt um zumindest 2%, vorzugsweise um zumindest 5% und besonders bevorzugt um zumindest 10% gegenüber dem Innendurchmesser des Führungskanals in dem Dosierabschnitt. Bevorzugt begrenzt der Führungskanal sowohl in dem Dosierabschnitt, als auch in dem Mischabschnitt einen kreisförmigen Querschnitt. Der Führungskanal weist insbesondere einen ringförmigen Querschnitt auf. Dadurch kann insbesondere eine verbesserte Durchmischung erreicht werden. Grundsätzlich wäre jedoch auch denkbar, dass der Führungskanal der Fördereinheit in einem Mischabschnitt und dem Dosierabschnitt der Fördereinheit einen identischen Innendurchmesser aufweist.

Erfindungsgemäß wird vorgeschlagen, dass die zumindest eine Dosiereinheit von einer Fördereinheit gebildet ist und einen Führungskanal und ein Förderwerkzeug aufweist, wobei der Führungskanal der Dosiereinheit in einem Zentralbereich in den Führungskanal der Fördereinheit mündet, wobei der Führungskanal der Dosiereinheit in den Dosierabschnitt der Fördereinheit mündet. Vorzugsweise ist das Förderwerkzeug der Dosiereinheit von einer Dosierschnecke gebildet. Unter einem "Zentralbereich" soll in diesem Zusammenhang insbesondere ein sich zwischen zwei Endbereichen des Führungskanals erstreckender Bereich des Führungskanals verstanden werden. Bevorzugt kann der Führungskanal entlang seiner Haupterstreckungsrichtung in drei Bereiche mit identischer Länge aufgeteilt werden, und zwar einen ersten Endbereich, einen Zentralbereich und einen zweiten Endbereich. Der Zentralbereich befindet sich entlang der Haupterstreckungsrichtung des Führungskanals insbesondere zwischen dem ersten Endbereich und dem zweiten Endbereich. Die Bereiche sind in radialer Richtung insbesondere durch einen Außendurchmesser des Führungskanals begrenzt. Unter einer "Haupterstreckungsrichtung" eines Objekts soll dabei insbesondere eine Richtung verstanden werden, welche parallel zu einer längsten Kante eines kleinsten geometrischen Quaders verläuft, welcher das Objekt gerade noch vollständig umschließt. Die Haupterstreckungsrichtung des Führungskanals entspricht insbesondere einer Haupterstreckungsrichtung der Fördereinheit und erstreckt sich parallel zu einer Antriebsachse des Förderwerkzeugs der Fördereinheit. Dadurch kann die zweite Mischgutkomponente bereits in der Fördereinheit der ersten Mischgutkomponente beigemischt werden. Hierdurch kann/können eine vorteilhaft zuverlässige Durchmischung und/oder vorteilhaft kurze Mischzeiten erreicht werden. Es kann gegenüber klassischen Dosier- und Mischsystemen insbesondere eine vorteilhaft kurze Mischzeit erreicht werden, insbesondere zwischen 0,1 und 10 Sekunden. Ferner kann dadurch ein sehr synchrones Start- und Stoppverhalten der zwei Dosiervorrichtungen erreicht werden, insbesondere wenn beispielswiese die Fülllinie Störungen hat.

Erfindungsgemäß wird ferner vorgeschlagen, dass eine maximale Förderleistung der Fördereinheit wesentlich größer ist, als eine maximale Förderleistung der Dosiereinheit. Vorzugsweise ist die maximale Förderleistung der Fördereinheit zumindest fünf-, vorzugsweise zumindest zehn-, bevorzugt zumindest hundert- und besonders bevorzugt zumindest fünfhundert-mal größer, als eine maximale Förderleistung der Dosiereinheit. Bevorzugt ist die erste Dosiervorrichtung wesentlich größer dimensioniert, als die zweite Dosiervorrichtung. Unter "wesentlich größer" soll in diesem Zusammenhang insbesondere verstanden werden, dass ein Wert, insbesondere ein Wert einer Leistung, zumindest um einen Faktor drei, vorzugsweise um einen Faktor zehn, bevorzugt um einen Faktor zwischen 100 und 10.000 größer ist als ein Vergleichswert, insbesondere ein Wert der Leistung der Vergleichseinheit. Dadurch kann insbesondere ein vorteilhaft kompaktes Dosier- und Mischsystem bereitgestellt werden. Es kann insbesondere ein vorteilhaft flexibler Einsatz des Dosier- und Mischsystems erreicht werden. Insbesondere können damit vorteilhaft Verhältnisse der Dosierströme von 1:3 bis 1:10.000 erzielt werden. Besonders bevorzugt ist insbesondere ein Verhältnis zwischen 1:100 und 1:10.000. Ferner können dadurch die Investitionskosten des Dosier- und Mischsystems gering gehalten werden.

Erfindungsgemäß wird weiter vorgeschlagen, dass die erste Dosiervorrichtung und die zweite Dosiervorrichtung von einem gravimetrischen Schneckendosierer gebildet sind, wobei die Welle des Förderwerkzeugs an einem Ende durch eine Außenwand des Zuführgehäuses hindurch aus dem Aufnahmebereich ragt und dort von einer Antriebseinheit angetrieben wird und wobei der Mischabschnitt vollständig in dem Führungskanal angeordnet ist, während sich der Dosierabschnitt von dem Zuführgehäuse in den Führungskanal erstreckt. Vorzugsweise sind die erste Dosiervorrichtung und die zweite Dosiervorrichtung jeweils von einem gravimetrischen Schneckendosierer gebildet. Der Schneckendosierer ist dabei insbesondere in ein Wiegesystem integriert, wobei der Massenstrom, der durch die Rotation des Förderwerkzeug der Fördereinheit und/oder des Förderwerkzeugs der Dosiereinheit die erste Dosiervorrichtung und/oder die zweite Dosiervorrichtung verlässt, gemessen und mit einem Sollwert verglichen wird. Bei dem Einsatz von mehreren Dosiervorrichtungen wird insbesondere zudem sichergestellt, dass die Mischgutkomponenten im richtigen Rezeptanteil in die Mischvorrichtung gelangen. In der Mischvorrichtung erfolgt insbesondere dann die Feinvermischung, wobei die mittlere Mischzeit bzw. Verweilzeit wenige Sekunden bis Stunden betragen kann. Dadurch kann insbesondere ein vorteilhaft zuverlässiges Dosier- und Mischsystem bereitgestellt werden.

Ferner wird vorgeschlagen, dass das Dosier- und Mischsystem eine Steuer- und/oder Regeleinheit aufweist, die zu einer synchronen Steuerung und/oder Regelung der ersten Dosiervorrichtung und zweiten Dosiervorrichtung vorgesehen ist. Vorzugsweise ist die Steuer- und/oder Regeleinheit dazu vorgesehen, die Antriebe der ersten Dosiervorrichtung und der zweiten Dosiervorrichtung gleichzeitig hoch- und runterzufahren, damit eine Rezeptur immer stimmt. Ferner kann dadurch ein vorteilhaft synchrones Start- und Stoppverhalten der zwei Dosiervorrichtungen erreicht werden, insbesondere wenn beispielswiese die Fülllinie Störungen hat. Unter einer "Steuer- und/oder Regeleinheit" soll insbesondere eine Einheit mit zumindest einer Steuerelektronik verstanden werden. Unter einer "Steuerelektronik" soll insbesondere eine Einheit mit einer Prozessoreinheit und mit einer Speichereinheit sowie mit einem in der Speichereinheit gespeicherten Betriebsprogramm verstanden werden. Vorzugsweise ist die Steuer- und/oder Regeleinheit jedoch von einer speicherprogrammierbaren Steuerung gebildet.

Des Weiteren geht die Erfindung aus von einem Verfahren zum Betrieb des Dosier- und Mischsystems. Es wird vorgeschlagen, dass die erste Dosiervorrichtung und die zweite Dosiervorrichtung synchron mittels der der Steuer- und/oder Regeleinheit hoch und/oder heruntergefahren werden. Vorzugsweise werden bei einem Betrieb die Antriebe der ersten Dosiervorrichtung und der zweiten Dosiervorrichtung gleichzeitig hoch- und runtergefahren, damit eine Rezeptur immer stimmt. Ferner kann dadurch ein vorteilhaft synchrones Start- und Stoppverhalten der zwei Dosiervorrichtungen erreicht werden, insbesondere wenn beispielsweise die Fülllinie Störungen hat.

Es wird ferner vorgeschlagen, dass mittels eines Wiegesystems kontinuierlich, eine die erste Dosiervorrichtung verlassende erste Mischgutkomponente und eine die zweite Dosiervorrichtung verlassende zweite Mischgutkomponente erfasst werden. Des Weiteren wird vorgeschlagen, dass ein Verhältnis eines Gewichts der die erste Dosiervorrichtung verlassenden ersten Mischgutkomponente und eines Gewichts der die zweite Dosiervorrichtung verlassenden zweiten Mischgutkomponente mit einem Sollwert verglichen wird. Vorzugsweise sind die erste Dosiervorrichtung und die zweite Dosiervorrichtung dabei insbesondere in ein Wiegesystem integriert, wobei der Massenstrom, der durch die Rotation des Förderwerkzeug der Fördereinheit und/oder des Förderwerkzeugs der Dosiereinheit die erste Dosiervorrichtung und/oder die zweite Dosiervorrichtung verlässt, gemessen und mit einem Sollwert verglichen wird. Zudem wird mittels der ersten Dosiervorrichtung und der zweiten Dosiervorrichtung sichergestellt, dass die Mischgutkomponenten im richtigen Rezeptanteil in die Mischvorrichtung gelangen. In der Mischvorrichtung erfolgt insbesondere dann die Feinvermischung, wobei die mittlere Mischzeit bzw. Verweilzeit wenige Sekunden bis Stunden betragen kann. Dadurch kann insbesondere eine vorteilhaft zuverlässige Dosierung erreicht werden. Vorzugsweise können dadurch vorteilhaft genaue Rezeptanteile eingestellt werden.

Das erfindungsgemäße Dosier- und Mischsystem sowie das Verfahren sollen hierbei nicht auf die oben beschriebene Anwendung und Ausführungsform beschränkt sein. Insbesondere können das erfindungsgemäße Dosier- und Mischsystem sowie das Verfahren zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein erfindungsgemäßes Dosier- und Mischsystem mit einer Mischvorrichtung, mit einer ersten Dosiervorrichtung und mit einer zweiten Dosiervorrichtung und einen zusätzlichen Nachfüllbehälter für die erste Dosiervorrichtung in einer schematischen Darstellung,

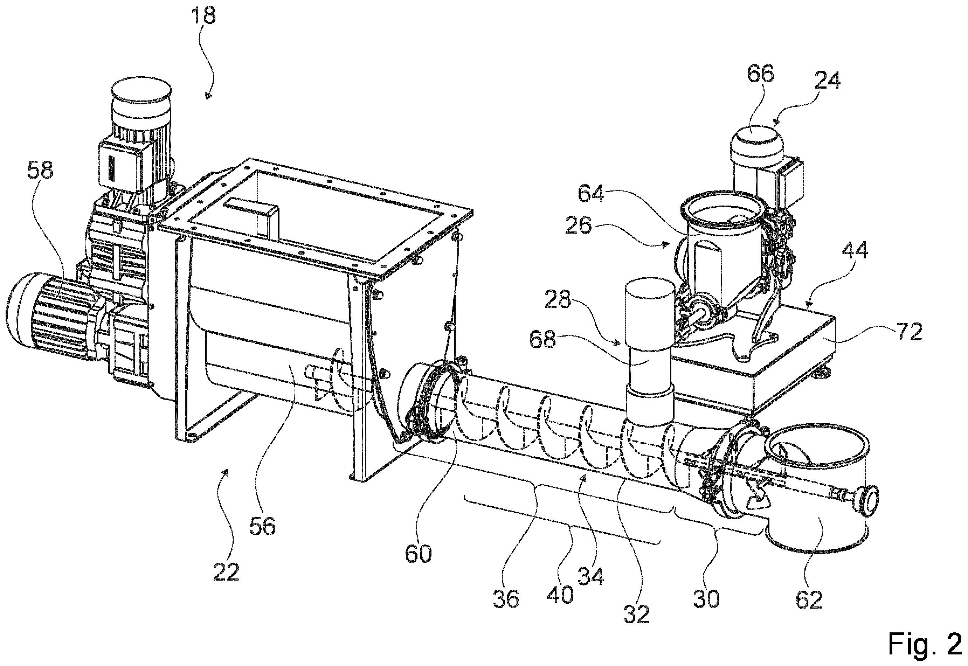

- Fig. 2: die erste Dosiervorrichtung und die zweite Dosiervorrichtung des erfindungsgemäßen Dosier- und Mischsystems in einer schematischen Darstellung,

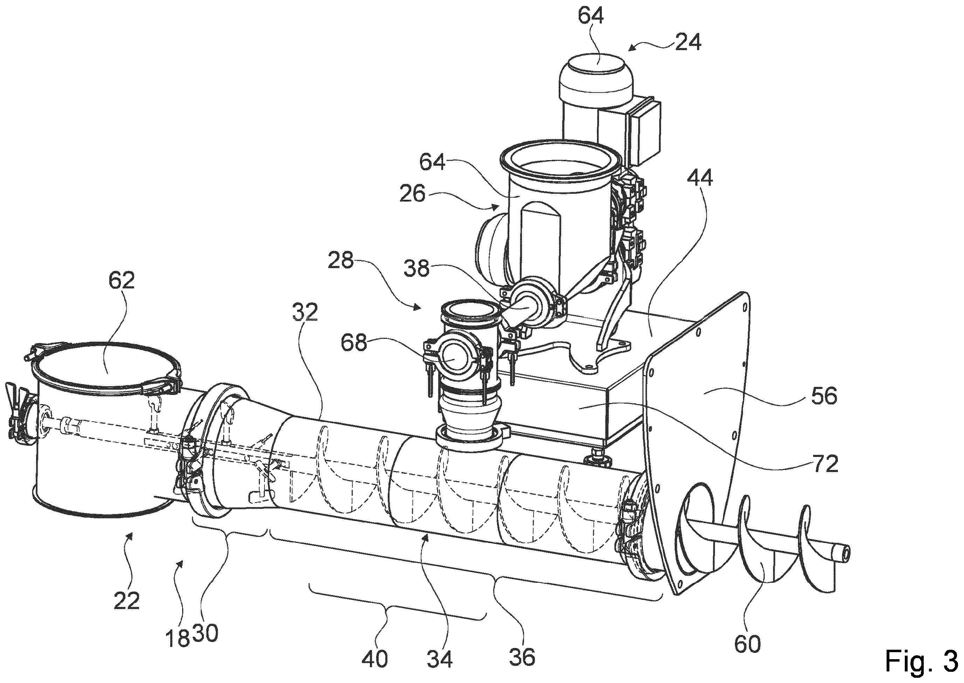

- Fig. 3: einen Teilausschnitt der ersten Dosiervorrichtung mit einer Fördereinheit und der zweiten Dosiervorrichtung mit einer Dosiereinheit in einer schematischen Teilschnittdarstellung und
- Fig. 4: ein schematisches Steuerdiagramm eines Verfahrens zu einem Betrieb des erfindungsgemäßen Dosier- und Mischsystems.

### Beschreibung der Ausführungsbeispiele

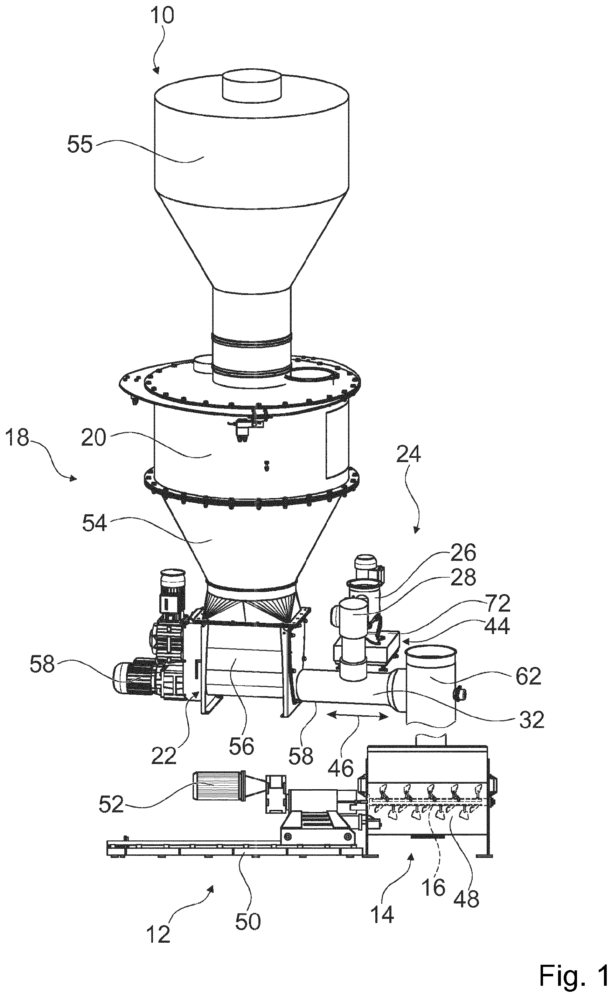

Die Figur 1 zeigt ein Dosier- und Mischsystem 10. Das Dosier- und Mischsystem 10 ist insbesondere für einen kontinuierlichen Mischprozess. Grundsätzlich wäre jedoch auch eine andere, einem Fachmann als sinnvoll erscheinende Anwendung des Dosier- und Mischsystems 10 denkbar. Das Dosier- und Mischsystem 10 weist zumindest zwei Dosiervorrichtungen 18, 24, insbesondere für Feststoffe, auf sowie eine nachfolgende Mischvorrichtung 12, welche Mischgutkomponenten insbesondere durch Rotation radial und axial vermischt.

Das Dosier- und Mischsystem 10 weist die Mischvorrichtung 12 auf. Die Mischvorrichtung 12 ist von einer Schüttgutmischvorrichtung gebildet. Die Mischvorrichtung 12 ist beispielhaft von einem Einwellenmischer gebildet. Die Mischvorrichtung 12 ist von einem horizontal liegenden Einwellenmischer gebildet. Vorzugsweise kann die Mischvorrichtung 12 sowohl für Chargen- oder kontinuierliche Mischprozesse vorgesehen sein. Die Mischvorrichtung 12 ist von einer kontinuierlichen Mischvorrichtung gebildet. Die Mischvorrichtung 12 ist beispielhaft von einem Paddelmischer, insbesondere von einem horizontalen Paddelmischer, gebildet. Grundsätzlich wäre jedoch auch eine andere, einem Fachmann als sinnvoll erscheinende Ausbildung der Mischvorrichtung 12 denkbar. Mittels der Mischvorrichtung 12 wird durch zufälligen Partikelaustausch, insbesondere durch Dispersion, und gezieltes Teilen und Vermengen, insbesondere durch Konvektion, eine homogene Mischung unterschiedlicher Mischgüter erzielt. Die Mischvorrichtung 12 ist zu einem Mischen von Feststoffen und Feststoffen mit Flüssigkeiten vorgesehen. Grundsätzlich wäre jedoch auch eine andere, einem Fachmann als sinnvoll erscheinende Anwendung denkbar.

Die Mischvorrichtung 12 weist einen Mischbehälter 14 auf. Der Mischbehälter 14 weist eine zylindrische Grundform auf. Eine Haupterstreckungsrichtung 46 des Mischbehälters 14 erstreckt sich während eines Betriebs im Wesentlichen horizontal. Der Mischbehälter 14 weist daher eine liegend zylindrische Grundform auf. Ferner bildet der Mischbehälter 14 ein Gehäuse der Mischvorrichtung 12 aus. Der Mischbehälter 14 weist eine Außenhülle 48 auf. Die Außenhülle 48 weist mehrere Füße auf, welche den Mischbehälter 14 abstützen. Der Mischbehälter 14 ist über die Füße der Außenhülle 48 vorzugsweise auf einem Gestell 50 montiert. Die Außenhülle 48 besteht im Wesentlichen aus Metall. Grundsätzlich wäre jedoch auch eine andere, einem Fachmann als sinnvoll erscheinende Materialausgestaltung denkbar. Des Weiteren weist der Mischbehälter 14 einen Aufnahmebereich zu einer Aufnahme eines Mischguts auf. Der Aufnahmebereich weist eine zylindrische Form auf. Der Aufnahmebereich weist entlang einer Mittelachse, in einer Ebene senkrecht zu der Mittelachse betrachtet, einen konstanten Querschnitt auf. Die Mittelachse des Aufnahmebereichs erstreckt sich parallel zu der Haupterstreckungsrichtung 46 des Mischbehälters 14. Der Aufnahmebereich ist teilweise durch die Außenhülle 48 des Mischbehälters 14 begrenzt. Ferner weist der Mischbehälter 14 zwei Endwände auf. Die Endwände verschließen den Mischbehälter 14 an zwei gegenüberliegenden Enden der Außenhülle 48. Die Endwände begrenzen den Aufnahmebereich an gegenüberliegenden Enden entlang der Mittelachse des Aufnahmebereichs. Der Mischbehälter 14 weist in dem Bereich einer Endwand eine Schwenktür auf. Die Endwand des Mischbehälters 14 ist im Wesentlichen vollständig von der Schwenktür gebildet. Die Schwenktür dient insbesondere dazu, den Aufnahmebereich des Mischbehälters 14 zugänglich zu machen. Die Schwenktür ist von einer Fronttür gebildet.

Ferner weist die Mischvorrichtung 12 eine, beispielsweise einseitig gelagerte, Mischeinheit 16 auf. Die Mischeinheit 16 ist zu einem Mischen des in dem Mischbehälter 14 befindlichen Mischguts vorgesehen. Die Mischeinheit 16 ist beispielhaft in einer Endwand des Mischbehälters 14 einseitig gelagert. Die Mischeinheit 16 ist von einer Wellenmischeinheit gebildet. Die Mischeinheit 16 weist eine Mischerwelle auf. Eine Drehachse der Mischerwelle erstreckt sich parallel zu der Haupterstreckungsrichtung 46 des Mischbehälters 14. Die Mischerwelle ist von einem einseitig gelagerten, freilaufenden Mischwerkzeug gebildet. Die Mischerwelle besteht aus einer Welle sowie mehreren an einem Umfang der Welle angeordneten Mischmitteln. Die Welle der Mischerwelle ist von einer kreiszylindrischen Vollwelle gebildet. Grundsätzlich wäre jedoch auch eine andere, einem Fachmann als sinnvoll erscheinende Ausbildung der Welle denkbar, wie beispielsweise als Hohlwelle. Die Mischmittel sind jeweils aus Paddeln gebildet. Grundsätzlich wäre jedoch auch eine andere, einem Fachmann als sinnvoll erscheinende Ausbildung der Mischmittel denkbar. Die Mischerwelle ist während eines Betriebs im Wesentlichen in dem Aufnahmebereich des Mischbehälters 14 angeordnet. Die Mischerwelle ragt in den Aufnahmebereich. Die Welle der Mischerwelle ragt an einem Ende durch eine der Endwände hindurch aus dem Aufnahmebereich und wird dort von einer Antriebseinheit 52 angetrieben. Die Antriebseinheit 52 treibt über ein nicht weiter sichtbares Getriebe die Mischerwelle an. Die Antriebseinheit 52 treibt die Mischerwelle rotatorisch an. Die Antriebseinheit 52 ist von einem Motor gebildet. Die Antriebseinheit 52 ist von einem Elektromotor gebildet. Die Mischeinheit 16 ist komplett aus dem Mischbehälter 14 ausfahrbar ausgebildet. Durch ein Ausziehen der Mischeinheit 16 lässt sich die Mischerwelle einfach und komplett aus dem Mischer herausziehen. Der gesamte Mischbehälter 14 ist so vorteilhaft für die Reinigung zugänglich.

Das Dosier- und Mischsystem 10 weist ferner eine erste Dosiervorrichtung 18 auf. Die erste Dosiervorrichtung 18 ist entlang eines Massenstroms der Mischgutkomponenten vor der Mischvorrichtung 12 angeordnet. Die erste Dosiervorrichtung 18 ist dazu vorgesehen der Mischvorrichtung 12 definiert zumindest eine erste Mischgutkomponente zuzuführen. Die erste Dosiervorrichtung 18 ist von einem gravimetrischen Schneckendosierer gebildet. Die erste Dosiervorrichtung 18 weist einen ersten Dosierbehälter 20 mit einem Aufnahmebereich zu einer Aufnahme einer ersten Mischgutkomponente auf. Der Dosierbehälter 20 weist eine kegelstumpfförmige Grundform auf, wobei eine spitz zulaufende Seite auf einer Unterseite angeordnet ist. Der Dosierbehälter 20 ist trichterförmig ausgebildet. Der Dosierbehälter 20 weist eine Außenhülle 54 auf, welche den Aufnahmebereich des Dosierbehälters 20 begrenzt. Über dem Dosierbehälter 20 ist ein Nachfüllbehälter 55 der ersten Dosiervorrichtung 18 angeordnet. Über den Nachfüllbehälter 55 kann der Dosierbehälter 20 weiter mit der ersten Mischgutkomponente gefüllt werden. Der Nachfüllbehälter 55 ist zu einem definierten Nachfüllen des Dosierbehälters 20 vorgesehen, wobei der Nachfüllbehälter 55 insbesondere automatisch oder manuell mit der ersten Mischgutkomponente befüllt werden kann. Der Nachfüllbehälter 55 weist ebenfalls eine kegelstumpfförmige Grundform auf, wobei eine spitz zulaufende Seite auf einer Unterseite angeordnet ist und in den Dosierbehälter 20 mündet. Der Nachfüllbehälter 55 ist trichterförmig ausgebildet. Vorzugsweise ist zwischen dem Nachfüllbehälter 55 und dem Dosierbehälter 20 nicht weiter sichtbar ein Ventil, insbesondere ein Klappenventil, angeordnet, über welches gezielt die erste Mischgutkomponente von dem Nachfüllbehälter 55 in den Dosierbehälter 20 geleitet werden kann.

Der Dosierbehälter 20 mündet an einer Unterseite in ein Zuführgehäuse 56 einer Fördereinheit 22. Die erste Dosiervorrichtung 18 weist eine Fördereinheit 22 auf. Die Fördereinheit 22 weist das Zuführgehäuse 56 auf. Das Zuführgehäuse 56 ist an einer Unterseite des Dosierbehälters 20 angeordnet und weist einen an den Aufnahmebereich des Dosierbehälters 20 anschließenden Aufnahmebereich auf. Das Zuführgehäuse 56 ist zu einem Zusammenführen der ersten Mischgutkomponente aus dem Dosierbehälter 20 in einen zylindrischen Förderbereich der Fördereinheit 22 vorgesehen. Ferner weist die Fördereinheit 22 einen Führungskanal 32 und ein in dem Führungskanal 32 rotierend abgetriebenes Förderwerkzeug 34 auf. Das Zuführgehäuse 56 mündet in den Führungskanal 32. Der Führungskanal 32 weist einen an den Aufnahmebereich des Zuführgehäuses 56 angrenzenden Aufnahmebereich auf. Der Führungskanal 32 weist eine hohlzylindrische Grundform auf. Der Führungskanal 32 ist von einem Rohr gebildet.

Der Führungskanal 32 erstreckt sich insbesondere horizontal. Eine Haupterstreckungsrichtung des Führungskanals 32 entspricht insbesondere der Haupterstreckungsrichtung 46 des Mischbehälters 14.

Das Förderwerkzeug 34 der Fördereinheit 22 weist eine rotierend getriebene Welle 60 auf. Die Welle 60 des Förderwerkzeugs 34 ragt an einem Ende durch eine Außenwand des Zuführgehäuses 56 hindurch aus dem Aufnahmebereich und wird dort von einer Antriebseinheit 58 angetrieben. Die Antriebseinheit 58 treibt über ein nicht weiter sichtbares Getriebe die Welle 60 an. Die Antriebseinheit 58 treibt die Welle 60 rotatorisch an. Die Antriebseinheit 58 ist von einem Motor gebildet. Die Antriebseinheit 58 ist von einem Elektromotor gebildet. Ferner weist die Fördereinheit 22 einen Mischabschnitt 30 und einen Dosierabschnitt 36 auf. Der Mischabschnitt 30 grenzt direkt an den Dosierabschnitt 36 an. Der Mischabschnitt 30 ist auf einer dem Dosierbehälter 20 angewandten Ende der Fördereinheit 22 angeordnet. Der Mischabschnitt 30 ist vollständig in dem Führungskanal 32 angeordnet, während sich der Dosierabschnitt 36 von dem Zuführgehäuse 56 in den Führungskanal 32 erstreckt. Der Mischabschnitt 30 ist entlang des Massenstroms der ersten Mischgutkomponente nach dem Dosierabschnitt 36 angeordnet. Das Förderwerkzeug 34 der Fördereinheit 22 ist in dem Mischabschnitt 30 der Fördereinheit 22 als Mischwerkzeug ausgebildet. Die Welle 60 des Förderwerkzeugs 34 weist dazu in dem Mischabschnitt 30 mehreren an einem Umfang eines zylindrischen Grundkörpers der Welle 60 angeordnete Mischmittel auf. Die Mischmittel sind jeweils von Paddeln gebildet. Die zusätzlichen Paddel erzwingen die Vermischung von Mischgutkomponenten. Grundsätzlich wäre jedoch auch eine andere, einem Fachmann als sinnvoll erscheinende Ausgestaltung des Mischmittels denkbar. Insbesondere wäre denkbar, dass die Mischmittel zudem zu einer Förderung der Mischgutkomponenten vorgesehen sind. Ferner ist das Förderwerkzeug 34 der Fördereinheit 22 in einem von dem Mischabschnitt 30 der Fördereinheit 22 verschiedenen Dosierabschnitt 36 der Fördereinheit 22 als Dosierschnecke ausgebildet. Das Förderwerkzeug 34 der Fördereinheit 22 ist in dem Dosierabschnitt 36 der Fördereinheit 22 als archimedische Schraube ausgebildet. Die Welle 60 des Förderwerkzeugs 34 weist dazu in dem Dosierabschnitt 36 eine schneckenförmig umlaufende Wandung auf, welcher sich axial entlang des zylindrischen Grundkörpers der Welle 60 erstreckt. In radialer Richtung weist die Wandung insbesondere eine Höhe auf, welche sich von dem zylindrischen Grundkörper der Welle 60 bis zu einer Innenseite des Führungskanals 32 erstreckt.

Ferner weist der Führungskanal 32 der Fördereinheit 22 in dem Mischabschnitt 30 der Fördereinheit 22 einen gegenüber dem Dosierabschnitt 36 vergrößerten Innendurchmesser auf. Der Führungskanal 32 weitet sich zu einer Verbesserung eines Mischergebnisses zu dem Mischabschnitt 30 hin auf. Eine Durchmessererweiterung bringt den erforderlichen Raum in der dadurch gebildeten Mischkammer.

Die Fördereinheit 22 ist zu einer Förderung der ersten Mischgutkomponente von dem ersten Dosierbehälter 20 zu dem Mischbehälter 14 vorgesehen. Der Führungskanal 32 erstreckt sich dazu von dem ersten Dosierbehälter 20 bis hin zu einem vertikalen Zuführkanal 62 der Mischvorrichtung 12. Der Zuführkanal 62 der Mischvorrichtung 12 ist an einer Oberseite des Mischbehälters 14 angeordnet und mündet in den Aufnahmebereich des Mischbehälters 14.

Des Weiteren weist das Dosier- und Mischsystem 10 eine zweite Dosiervorrichtung 24 auf. Die zweite Dosiervorrichtung 24 ist entlang eines Massenstroms der Mischgutkomponenten vor der Mischvorrichtung 12 angeordnet. Die zweite Dosiervorrichtung 24 ist dazu vorgesehen der Mischvorrichtung 12 definiert eine zweite Mischgutkomponente zuzuführen. Die zweite Dosiervorrichtung 24 ist von einem gravimetrischen Schneckendosierer gebildet. Die zweite Dosiervorrichtung 24 weist einen zweiten Dosierbehälter 26 mit einem Aufnahmebereich zu einer Aufnahme der zweiten Mischgutkomponente auf. Der zweite Dosierbehälter 26 weist eine zylindrische Grundform auf, wobei der Dosierbehälter 26 zu einem unteren Ende hin verjüngt. Der zweite Dosierbehälter 26 ist tonnenartig ausgebildet, wobei sich zwei Seiten zu einer Unterseite hin konisch verjüngen. Der zweite Dosierbehälter 26 weist eine Außenhülle 64 auf, welche den Aufnahmebereich des Dosierbehälters 26 begrenzt. Der zweite Dosierbehälter 26 ist an einer Unterseite halbrohrförmig ausgebildet und mündet an einer Stirnseite in eine Dosiereinheit 28 der zweiten Dosiervorrichtung 24.

Die zweite Dosiervorrichtung 24 weist eine Dosiereinheit 28 auf. Die Dosiereinheit 28 ist von einer Fördereinheit gebildet. Die Dosiereinheit 28 weist einen Führungskanal 38 und ein Förderwerkzeug auf. Der zweite Dosierbehälter 26 mündet an einer Unterseite, insbesondere in horizontaler Richtung, in den Führungskanal 38. Der Führungskanal 38 weist einen an den Aufnahmebereich des zweiten Dosierbehälters 26 angrenzenden Aufnahmebereich auf. Der Führungskanal 38 weist eine hohlzylindrische Grundform auf. Der Führungskanal 32 ist von einem Rohr gebildet. Der Führungskanal 38 erstreckt sich horizontal. Das Förderwerkzeug der Dosiereinheit 28 weist eine rotierend getriebene Welle auf. Die Welle des Förderwerkzeugs ragt an einem Ende durch eine Außenwand des zweiten Dosierbehälters 26 hindurch aus dem Aufnahmebereich und wird dort von einer Antriebseinheit 66 angetrieben. Die Antriebseinheit 66 treibt über ein nicht weiter sichtbares Getriebe die Welle an. Die Antriebseinheit 66 treibt die Welle rotatorisch an. Die Antriebseinheit 66 ist von einem Motor gebildet. Die Antriebseinheit 66 ist von einem Elektromotor gebildet. Das Förderwerkzeug der Dosiereinheit 28 ist als Dosierschnecke ausgebildet. Das Förderwerkzeug ist als archimedische Schraube ausgebildet. Das Förderwerkzeug ist in dem Führungskanal 38 geführt und ragt teilweise in den Aufnahmebereich des zweiten Dosierbehälters 26.

Die Dosiereinheit 28 ist dazu vorgesehen, die zweite Mischgutkomponente von dem zweiten Dosierbehälter 26 der ersten Dosiervorrichtung 18 zuzuführen. Die Dosiereinheit 28 ist dazu vorgesehen, die zweite Mischgutkomponente von dem zweiten Dosierbehälter 26 der Fördereinheit 22 zuzuführen. Der Führungskanal 38 der Dosiereinheit 28 erstreckt sich dazu von dem zweiten Dosierbehälter 26 bis hin zu einem vertikalen Zuführkanal 68 der Fördereinheit 22. Der Zuführkanal 68 der Fördereinheit 22 ist an einer Oberseite des Führungskanals 32 der Fördereinheit 22 angeordnet und mündet in den Aufnahmebereich des Führungskanals 32 der Fördereinheit 22. Der Führungskanal 38 der Dosiereinheit 28 mündet in einem Zentralbereich 40 in den Führungskanal 32 der Fördereinheit 22. Der Führungskanal 38 der Dosiereinheit 28 mündet über den Zuführkanal 68 in einem Zentralbereich 40 in den Führungskanal 32 der Fördereinheit 22.

Die Fördereinheit 22 ist daher in dem Mischabschnitt 30 der Fördereinheit 22 zu einem Mischen der ersten Mischgutkomponente und der zweiten Mischgutkomponente vorgesehen. Der Mischabschnitt 30 ist entlang des Massenstroms der Mischgutkomponenten nach einer Zusammenführung der Mischgutkomponenten und damit nach dem Zuführkanal 68 angeordnet.

Eine maximale Förderleistung der Fördereinheit 22 ist wesentlich größer, als eine maximale Förderleistung der Dosiereinheit 28. Die maximale Förderleistung der Fördereinheit 22 ist zumindest fünf-, vorzugsweise zumindest zehn, bevorzugt zumindest hundert- und besonders bevorzugt zumindest fünfhundert-mal größer, als eine maximale Förderleistung der Dosiereinheit 28. Die Fördereinheit 22 weist beispielsweise eine Förderleistung von 10 t/h auf. Die Dosiereinheit 28 weist beispielhaft eine Förderleistung von 10 kg/h auf. Grundsätzlich beträgt ein Gesamtleistungsbereich der Fördereinheit 22 und/oder der Dosiereinheit 28 500 g/h bis 100 t/h. Das Verhältnis der Dosierströme der zweiten Dosiervorrichtung 24 zu der ersten Dosiervorrichtung 18 kann 1:5 bis 1:10.000 betragen. Die zweite Dosiervorrichtung 24 ist insbesondere von einem Mikrodosierer gebildet.

Das Dosier- und Mischsystem 10 weist ferner ein Wiegesystem 44 auf. Die erste Dosiervorrichtung 18 und die zweite Dosiervorrichtung 24 sind in das Wiegesystem 44 integriert. Das Wiegesystem 44 weist eine erste Wiegeeinheit 70, welche dazu vorgesehen ist, ein Gewicht der ersten Dosiervorrichtung 18 zu überwachen. Die erste Dosiervorrichtung 18 ist dazu beispielsweise auf einer stabilen Plattform der ersten Wiegeeinheit 70 montiert, welche mit einer Hochleistungswägetechnik ausgerüstet ist. Ferner weist das Wiegesystem 44 eine zweite Wiegeeinheit 72 auf, welche dazu vorgesehen ist, ein Gewicht der zweiten Dosiervorrichtung 24 zu überwachen. Die erste Dosiervorrichtung 24 ist dazu auf einer stabilen Plattform der zweiten Wiegeeinheit 72 montiert, welche mit einer Hochleistungswägetechnik ausgerüstet ist. Das Wiegesystem 44 ist dazu vorgesehen ein Gewicht der Dosiervorrichtungen 18, 24, insbesondere der darin befindlichen Mischgutkomponenten, zu überwachen. Das Wiegesystem 44 ist dazu vorgesehen, die die Dosiervorrichtungen 18, 24, verlassenden Mischgutkomponenten zu erfassen.

Ferner weist das Dosier- und Mischsystem 10 eine Steuer- und Regeleinheit 42 auf. Die Steuer- und Regeleinheit 42 ist mit dem Wiegesystem 44 gekoppelt. Die Steuer- und Regeleinheit 42 ist zu einer synchronen Steuerung und Regelung der ersten Dosiervorrichtung 18 und der zweiten Dosiervorrichtung 24 vorgesehen. Die Steuer- und Regeleinheit 42 ist von einer speicherprogrammierbaren Steuerung gebildet.

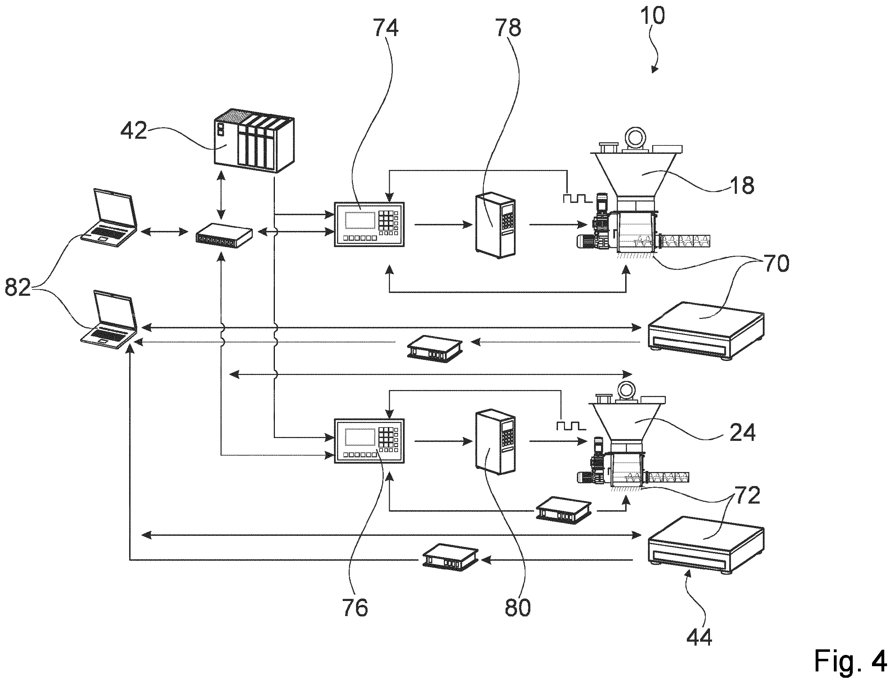

Figur 4 zeigt ein schematisches Steuerdiagramm eines Verfahrens zu einem Betrieb des erfindungsgemäßen Dosier- und Mischsystems 10. Bei dem Verfahren wird die erste Dosiervorrichtung 18 und die zweite Dosiervorrichtung 24 mittels der Steuer- und Regeleinheit 42 synchron gesteuert und geregelt. Die Steuer- und Regeleinheit 42 ist zu einer Steuerung und Regelung der ersten Dosiervorrichtung 18 und der zweiten Dosiervorrichtung 24 mit einer der ersten Dosiervorrichtung 18 zugeordneten ersten Steuereinheit 74 und mit einer der zweiten Dosiervorrichtung 24 zugeordneten zweiten Steuereinheit 76 des Wiegesystems 44 verbunden. Die erste Steuereinheit 74 und die zweite Steuereinheit 76 sind jeweils beispielhaft von einer Easydos-Pro-Steuereinheit gebildet. Die erste Steuereinheit 74 des Wiegesystems 44 ist mit der ersten Wiegeeinheit 70 verbunden und empfängt ein Messsignal der Wiegeeinheit 70. Ferner ist die erste Steuereinheit 74 des Wiegesystems 44 zu einer Ansteuerung der Fördereinheit 22 über einen Frequenzinverter 78 mit der Antriebseinheit 58 der ersten Dosiervorrichtung 18 verbunden. Gleichzeitig wird von der ersten Steuereinheit 74 eine Drehzahl der Antriebseinheit 58 überwacht. Die zweite Steuereinheit 76 des Wiegesystems 44 ist mit der zweiten Wiegeeinheit 72 verbunden und empfängt ein Messsignal der zweiten Wiegeeinheit 72. Vorzugsweise wird das Messignal der zweiten Wiegeeinheit 72 bei einer Übertragung an die zweite Steuereinheit 76 verstärkt. Ferner ist die zweite Steuereinheit 76 des Wiegesystems 44 zu einer Ansteuerung der Dosiereinheit 28 über einen Frequenzinverter 80 mit der Antriebseinheit 66 der zweiten Dosiervorrichtung 24 verbunden. Gleichzeitig wird von der zweiten Steuereinheit 76 eine Drehzahl der Antriebseinheit 66 überwacht. Des Weiteren ist das Wiegesystem 44, insbesondere die erste Wiegeeinheit 70 und die zweite Wiegeeinheit 72, und die Steuer- und Regeleinheit 42 zudem mit einer Recheneinheit 82 verbunden, die zu einer Synchronisation der ersten Antriebseinheit 58 und der zweiten Antriebseinheit 66 vorgesehen ist. Die Recheneinheit 82 kann beispielsweise von einem Server oder einem Computer gebildet sein.

In einem Betrieb werden die erste Dosiervorrichtung 18 und die zweite Dosiervorrichtung 24 synchron mittels der Steuer- und Regeleinheit 42 hoch und heruntergefahren. Ferner wird während des Betriebs, insbesondere während eines Mischbetriebs, mittels eines Wiegesystems 44 kontinuierlich eine die erste Dosiervorrichtung 18 verlassende erste Mischgutkomponente und eine die zweite Dosiervorrichtung 24 verlassende zweite Mischgutkomponente erfasst. Anschließend wird ein Verhältnis eines Gewichts der die erste Dosiervorrichtung 18 verlassenden ersten Mischgutkomponente und eines Gewichts der die zweite Dosiervorrichtung 24 verlassenden zweiten Mischgutkomponente mit einem Sollwert verglichen. Bei einer Abweichung von dem Sollwert kann durch Anpassung der Antriebseinheiten 58, 66 ein erfasstes Verhältnis an den Sollwert angeglichen werden. Über die Steuer- und Regeleinheit 42 kann dadurch ein konstanter Massenstrom gemäß einer Rezepturvorgabe gewährleistet werden.

### Bezugszeichen

- 10: Dosier- und Mischsystem
- 12: Mischvorrichtung
- 14: Mischbehälter
- 16: Mischeinheit
- 18: Dosiervorrichtung
- 20: Dosierbehälter
- 22: Fördereinheit
- 24: Dosiervorrichtung
- 26: Dosierbehälter
- 28: Dosiereinheit
- 30: Mischabschnitt
- 32: Führungskanal
- 34: Förderwerkzeug
- 36: Dosierabschnitt
- 38: Führungskanal
- 40: Zentralbereich
- 42: Steuer- und Regeleinheit
- 44: Wiegesystem
- 46: Haupterstreckungsrichtung
- 48: Außenhülle
- 50: Gestell
- 52: Antriebseinheit
- 54: Außenhülle
- 55: Nachfüllbehälter
- 56: Zuführgehäuse
- 58: Antriebseinheit
- 60: Welle
- 62: Zuführkanal
- 64: Außenhülle
- 66: Antriebseinheit
- 68: Zuführkanal
- 70: Wiegeeinheit
- 72: Wiegeeinheit
- 74: Steuereinheit
- 76: Steuereinheit
- 78: Frequenzinverter
- 80: Frequenzinverter
- 82: Recheneinheit

## Patentansprüche

1. Dosier- und Mischsystem (10) mit zumindest einer Mischvorrichtung (12), insbesondere einer kontinuierlichen Mischvorrichtung, welche zumindest einen Mischbehälter (14) mit einem Aufnahmebereich zu einer Aufnahme eines Mischguts und zumindest eine Mischeinheit (16) zu einem Mischen des in dem Mischbehälter (14) befindlichen Mischguts aufweist, wobei die Mischeinheit (16) eine Mischerwelle aufweist, mit zumindest einer ersten Dosiervorrichtung (18), die zumindest einen ersten Dosierbehälter (20) mit einem Aufnahmebereich zu einer Aufnahme einer ersten Mischgutkomponente und zumindest eine Fördereinheit (22) zu einer Förderung der ersten Mischgutkomponente von dem ersten Dosierbehälter (20) zu dem Mischbehälter (14) aufweist, und mit zumindest einer zweiten Dosiervorrichtung (24), die zumindest einen zweiten Dosierbehälter (26) mit einem Aufnahmebereich zu einer Aufnahme einer zweiten Mischgutkomponente und zumindest eine Dosiereinheit (28) aufweist, wobei die zumindest eine Dosiereinheit (28) dazu vorgesehen ist, die zweite Mischgutkomponente von dem zweiten Dosierbehälter (26) der ersten Dosiervorrichtung (18) zuzuführen, wobei der Dosierbehälter (20) an einer Unterseite in ein Zuführgehäuse (56) einer Fördereinheit (22) mündet, wobei die zumindest eine Fördereinheit (22) einen Führungskanal (32) und ein in dem Führungskanal (32) rotierend abgetriebenes Förderwerkzeug (34) aufweist, wobei die Fördereinheit (22) einen Mischabschnitt (30) und einen Dosierabschnitt (36) aufweist, wobei der Mischabschnitt (30) direkt an den Dosierabschnitt (36) angrenzt, wobei der Mischabschnitt (30) entlang des Massenstroms der ersten Mischgutkomponente nach dem Dosierabschnitt (36) angeordnet ist, wobei die zumindest eine Fördereinheit (22) in dem zumindest einen Mischabschnitt (30) der Fördereinheit (22) zu einem Mischen der ersten Mischgutkomponente und der zweiten Mischgutkomponente vorgesehen ist, wobei das Förderwerkzeug (34) der Fördereinheit (22) in dem von dem Mischabschnitt (30) der Fördereinheit (22) verschiedenen Dosierabschnitt (36) der Fördereinheit (22) als Dosierschnecke ausgebildet ist, wobei der Führungskanal (32) der Fördereinheit (22) in einem Mischabschnitt (30) der Fördereinheit (22) einen gegenüber dem Dosierabschnitt (36) vergrößerten Innendurchmesser aufweist, wobei die zumindest eine Dosiereinheit (28) von einer Fördereinheit gebildet ist und einen Führungskanal (38) und ein Förderwerkzeug aufweist, wobei der Führungskanal (38) der Dosiereinheit (28) in einem Zentralbereich (40) in den Führungskanal (32) der Fördereinheit (22) mündet, wobei der Führungskanal (38) der Dosiereinheit (28) in den Dosierabschnitt (36) der Fördereinheit (22) mündet, und wobei eine maximale Förderleistung der Fördereinheit (22) wesentlich größer ist, als eine maximale Förderleistung der Dosiereinheit (28), wobei die erste Dosiervorrichtung (18) und die zweite Dosiervorrichtung (24) von einem gravimetrischen Schneckendosierer gebildet sind, wobei die Welle (60) des Förderwerkzeugs (34) an einem Ende durch eine Außenwand des Zuführgehäuses (56) hindurch aus dem Aufnahmebereich ragt und dort von einer Antriebseinheit (58) angetrieben wird und wobei der Mischabschnitt (30) vollständig in dem Führungskanal (32) angeordnet ist, während sich der Dosierabschnitt (36) von dem Zuführgehäuse (56) in den Führungskanal (32) erstreckt, **dadurch gekennzeichnet, dass** das Förderwerkzeug (34) der Fördereinheit (22) in zumindest dem Mischabschnitt (30) der Fördereinheit (22) als Mischwerkzeug ausgebildet ist, wobei das Förderwerkzeug (34) der Fördereinheit (22) eine rotierend getriebene Welle (60) aufweist, die in dem Mischabschnitt (30) mehrere an einem Umfang eines zylindrischen Grundkörpers der Welle (60) angeordnete Mischmittel aufweist.

2. Dosier- und Mischsystem nach Anspruch 1,
**dadurch gekennzeichnet, dass**
die zumindest eine Dosiereinheit (28) dazu vorgesehen ist, die zweite Mischgutkomponente von dem zweiten Dosierbehälter (26) der Fördereinheit (22) zuzuführen.

3. Dosier- und Mischsystem nach einem der vorhergehenden Ansprüche,
**gekennzeichnet durch**
eine Steuer- und/oder Regeleinheit (42), die zu einer synchronen Steuerung und/oder Regelung der ersten Dosiervorrichtung (18) und zweiten Dosiervorrichtung (24) vorgesehen ist/sind.

4. Verfahren zu einem Betrieb des Dosier- und Mischsystems (10) nach einem der vorhergehenden Ansprüche.

5. Verfahren nach Anspruch 4,
**dadurch gekennzeichnet, dass**
die erste Dosiervorrichtung (18) und die zweite Dosiervorrichtung (24) synchron mittels der Steuer- und/oder Regeleinheit (42) hoch und/oder heruntergefahren werden.

6. Verfahren nach Anspruch 4 oder 5,
**dadurch gekennzeichnet, dass**
mittels eines Wiegesystems (44) kontinuierlich eine die erste Dosiervorrichtung (18) verlassende erste Mischgutkomponente und eine die zweite Dosiervorrichtung (24) verlassende zweite Mischgutkomponente erfasst wird.

7. Verfahren nach Anspruch 6,
**dadurch gekennzeichnet, dass**
ein Verhältnis eines Gewichts der die erste Dosiervorrichtung (18) verlassenden ersten Mischgutkomponente und eines Gewichts der die zweite Dosiervorrichtung (24) verlassenden zweiten Mischgutkomponente mit einem Sollwert verglichen wird.

## Claims

1. A metering and mixing system (10) having at least one mixing device (12), in particular a continuous mixing device, which has at least one mixing container (14) with a receiving region for receiving a mixing product and at least one mixing unit (16) for mixing the mixing product which is in the mixing container (14), wherein the mixing unit (16) has a mixing shaft, with at least one first metering device (18) which has at least one first metering container (20) having a receiving region for receiving a first mixing product component and at least one conveying unit (22) for conveying the first mixing product component from the first metering container (20) to the mixing container (14), and with at least one second metering device (24) which has at least one second metering container (26) having a receiving region for receiving a second mixing product component and at least one metering unit (28), wherein the at least one metering unit (28) is configured to supply the second mixing product component from the second metering container (26) to the first metering device (18), wherein the metering container (20) opens at a lower side into a supply housing (56) of a conveying unit (22), wherein the at least one conveying unit (22) has a guide channel (32) and a conveying tool (34) which is driven in rotation in the guide channel (32), wherein the conveying unit (22) has a mixing section (30) and a metering section (36), wherein the mixing section (30) directly adjoins the metering section (36), wherein the mixing section (30) is arranged downstream of the metering section (36) along the mass flow of the first mixing product component, wherein the at least one conveying unit (22), in the at least one mixing section (30) of the conveying unit (22), is configured for mixing the first mixing product component and the second mixing product component, wherein the conveying tool (34) of the conveying unit (22) is constructed as a metering screw in the metering section (36) of the conveying unit (22) different from the mixing section (30) of the conveying unit (22), wherein the guide channel (32) of the conveying unit (22) has an inner diameter which is increased with respect to the metering section (36) in the mixing section (30) of the conveying unit (22), wherein the at least one metering unit (28) is formed by a conveying unit and has a guide channel (38) and a conveying tool, wherein the guide channel (38) of the metering unit (28) opens in a central region (40) into the guide channel (32) of the conveying unit (22), wherein the guide channel (38) of the metering unit (28) opens into the metering section (36) of the conveying unit (22), and wherein a maximum conveying power of the conveying unit (22) is substantially greater than a maximum conveying power of the metering unit (28), wherein the first metering device (18) and the second metering device (24) are formed by a gravimetric screw feeder, wherein the shaft (60) of the conveying tool (34) projects at one end through an outer wall of the supply housing (56) out of the receiving region and is driven there by a drive unit (58) and wherein the mixing section (30) is completely arranged in the guide channel (32) while the metering section (36) extends from the supply housing (56) in the guide channel (32), **characterized in that** the conveying tool (34) of the conveying unit (22) is constructed as a mixing tool in the at least one mixing section (30) of the conveying unit (22), wherein the conveying tool (34) of the conveying unit (22) has a rotationally driven shaft (60) which has a plurality of mixing means which are arranged at a periphery of a cylindrical base member of the shaft (60) in the mixing section (30).

2. The metering and mixing system according to claim 1,
**characterized in that**
the at least one metering unit (28) is configured to supply the second mixing product component from the second metering container (26) to the conveying unit (22).

3. The metering and mixing system according to any one of the preceding claims,
**characterized by**
a control and/or regulation unit (42) which is/are configured for synchronously controlling and/or regulating the first metering device (18) and the second metering device (24).

4. A method for operating the metering and mixing system (10) according to any one of the preceding claims.

5. The method according to claim 4,
**characterized in that**
the first metering device (18) and the second metering device (24) are started and/or stopped synchronously by means of the control and/or regulation unit (42).

6. The method according to claim 4 or 5,
**characterized in that**
a first mixing product component which leaves the first metering device (18) and a second mixing product component which leaves the second metering device (24) are detected continuously by means of a weighing system (44).

7. The method according to claim 6,
**characterized in that**
a ratio of a weight of the first mixing product component which leaves the first metering device (18) and a weight of the second mixing product component which leaves the second metering device (24) is compared with a desired value.

## Revendications

1. Système de dosage et de mélange (10) comprenant au moins un dispositif de mélange (12), en particulier un dispositif de mélange continu, qui présente au moins un récipient de mélange (14) avec une zone de réception pour recevoir un produit à mélanger et au moins une unité de mélange (16) pour mélanger le produit à mélanger se trouvant dans le récipient de mélange (14), l'unité de mélange (16) présentant un arbre de mélangeur, comprenant au moins un premier dispositif de dosage (18) qui présente au moins un premier récipient de dosage (20) avec une zone de réception pour recevoir un premier composant de produit à mélanger et au moins une unité de transport (22) pour transporter le premier composant de produit à mélanger du premier récipient de dosage (20) au récipient de mélange (14), et comprenant au moins un deuxième dispositif de dosage (24) qui présente au moins un deuxième récipient de dosage (26) avec une zone de réception pour recevoir un deuxième composant de produit à mélanger et au moins une unité de dosage (28), l'au moins une unité de dosage (28) étant prévue pour amener le deuxième composant de produit à mélanger du deuxième récipient de dosage (26) au premier dispositif de dosage (18), le récipient de dosage (20) débouchant au niveau d'un côté inférieur dans un boîtier d'amenée (56) d'une unité de transport (22), l'au moins une unité de transport (22) présentant un canal de guidage (32) et un outil de transport (34) entraîné en rotation dans le canal de guidage (32), où l'unité de transport (22) présente une section de mélange (30) et une section de dosage (36), la section de mélange (30) étant directement adjacente à la section de dosage (36), la section de mélange (30) étant disposée le long du flux massique du premier composant de produit à mélanger après la section de dosage (36), l'au moins une unité de transport (22) étant prévue dans l'au moins une section de mélange (30) de l'unité de transport (22) pour mélanger le premier composant de produit à mélanger et le deuxième composant de produit à mélanger, l'outil de transport (34) de l'unité de transport (22) étant réalisé sous forme de vis sans fin de dosage dans la section de dosage (36) de l'unité de transport (22) différente de la section de mélange (30) de l'unité de transport (22), le canal de guidage (32) de l'unité de transport (22) présentant dans une section de mélange (30) de l'unité de transport (22) un diamètre intérieur agrandi par rapport à la section de dosage (36), l'au moins une unité de dosage (28) étant formée par une unité de transport et présentant un canal de guidage (38) et un outil de transport, le canal de guidage (38) de l'unité de dosage (28) débouchant dans une zone centrale (40) dans le canal de guidage (32) de l'unité de transport (22), le canal de guidage (38) de l'unité de dosage (28) débouchant dans la section de dosage (36) de l'unité de transport (22), et une puissance de transport maximale de l'unité de transport (22) étant sensiblement supérieure à une puissance de transport maximale de l'unité de dosage (28), le premier dispositif de dosage (18) et le deuxième dispositif de dosage (24) étant formés par un doseur à vis sans fin gravimétrique, l'arbre (60) de l'outil de transport (34) faisant saillie au niveau d'une extrémité à travers une paroi extérieure du boîtier d'amenée (56) hors de la zone de réception et y étant entraîné par une unité d'entraînement (58) et la section de mélange (30) étant disposée complètement dans le canal de guidage (32), tandis que la section de dosage (36) s'étend du boîtier d'amenée (56) dans le canal de guidage (32), **caractérisé en ce que** l'outil de transport (34) de l'unité de transport (22) est réalisé sous forme d'outil de mélange dans au moins la section de mélange (30) de l'unité de transport (22), l'outil de transport (34) de l'unité de transport (22) présentant un arbre (60) entraîné en rotation qui présente dans la section de mélange (30) plusieurs moyens de mélange disposés au niveau d'une périphérie d'un corps de base cylindrique de l'arbre (60).

2. Système de dosage et de mélange selon la revendication 1,
**caractérisé en ce que**
l'au moins une unité de dosage (28) est prévue pour amener le deuxième composant de produit à mélanger du deuxième récipient de dosage (26) à l'unité de transport (22).

3. Système de dosage et de mélange selon l'une quelconque des revendications précédentes,
**caractérisé par**
une unité de commande et/ou de régulation (42) qui est prévue pour une commande et/ou régulation synchrone du premier dispositif de dosage (18) et du deuxième dispositif de dosage (24).

4. Procédé pour faire fonctionner le système de dosage et de mélange (10) selon l'une quelconque des revendications précédentes.

5. Procédé selon la revendication 4,
**caractérisé en ce que**
le premier dispositif de dosage (18) et le deuxième dispositif de dosage (24) sont montés et/ou descendus de manière synchrone au moyen de l'unité de commande et/ou de régulation (42).

6. Procédé selon la revendication 4 ou 5,
**caractérisé en ce que**
un premier composant de produit à mélanger quittant le premier dispositif de dosage (18) et un deuxième composant de produit à mélanger quittant le deuxième dispositif de dosage (24) sont détectés en continu au moyen d'un système de pesage (44).

7. Procédé selon la revendication 6,
**caractérisé en ce que**
un rapport d'un poids du premier composant de produit à mélanger quittant le premier dispositif de dosage (18) et d'un poids du deuxième composant de produit à mélanger quittant le deuxième dispositif de dosage (24) est comparé à une valeur de consigne.
